# EUROPÄISCHE PATENTSCHRIFT

(11) **EP 0 644 841 B1**
(45) Veröffentlichungstag und Bekanntmachung des Hinweises auf die Patenterteilung: **03.01.1996**
(21) Anmeldenummer: 93912992.0
(22) Anmeldetag: 16.06.1993
(51) Int. Cl.: B62D 5/083

(54) **DREHSCHIEBERVENTIL FÜR HILFSKRAFTLENKUNGEN VON KRAFTFAHRZEUGEN**
ROTARY SLIDE VALVE FOR POWER ASSISTED STEERING SYSTEMS OF MOTOR VEHICLES
VANNE A TIROIR ROTATIF POUR DIRECTIONS ASSISTEES DE VEHICULES A MOTEUR

(30) Priorität: 19.06.1992 DE 4219978
(43) Veröffentlichungstag der Anmeldung: 29.03.1995
(73) Patentinhaber: ZF FRIEDRICHSHAFEN AG, D-88046 Friedrichshafen (DE)
(72) Erfinder: RUPP, Arthur, D-7088 Hüttlingen (DE)
(86) Internationale Anmeldenummer: EP9301526
(87) Internationale Veröffentlichungsnummer: WO9400328

(56) Entgegenhaltungen:
- DE-A- 2 114 453
- DE-A- 3 006 038
- DE-A- 3 234 667
- US-A- 3 746 045
- US-A- 4 788 877

## Beschreibung

Die Erfindung betrifft ein Drehschieberventil für Hilfskraftlenkungen von Kraftfahrzeugen nach dem Oberbegriff des Anspruches 1. Das Drehschieberventil enthält einen Drehschieber, der mit einem Ventil-Eingangsglied drehfest verbunden ist, und eine Steuerbüchse, die mit einem Ventil-Ausgangsglied drehfest verbunden ist. Das Ventil-Eingangsglied und der Drehschieber sind mit dem Ventil-Ausgangsglied über einen Torsionsstab und über eine Totgangkupplung verbunden. Der Drehschieber ist koaxial in der Steuerbüchse drehbeweglich angeordnet. Die beiden Teile sind maximal um den Verdrehweg der Totgangkupplung relativ zueinander verdrehbar. Die Steuerbüchse weist innenliegende, der Drehschieber weist außenliegende, teilweise in ihrer axialen Länge begrenzte und teilweise nach wenigstens einem Ende hin offene Steuer-Längsnuten auf, die miteinander zusammenwirken zur Steuerung eines Druckmittels zu und von zwei Arbeitsräumen eines Servomotors. Die Totgangkupplung besteht aus einem Mitnahmeprofil eines Ventil-Ausgangsgliedes und aus Aussparungen des Drehschiebers, in die das Mitnahmeprofil eingreift.

Ein derartiges Drehschieberventil ist beispielsweise bekannt aus dem US-Patent 37 46 045. Das bekannte Drehschieberventil enthält, ebenso wie andere bekannte Drehschieberventile, einen Drehschieber, der in einer Axialbohrung einer Steuerbüchse geführt ist. Der Drehschieber ist mit dem Ventil-Ausgangsglied über einen Torsionsstab verbunden. Außerdem ist der Drehschieber über eine Totgangkupplung mit dem Ventil-Ausgangsglied verbunden. Eine solche Totgangkupplung begrenzt die relative Verdrehung der beiden Ventilelemente zueinander und schafft einen mechanischen Anschlag des Ventiles nach Aufbrauch des Verdrehweges der Totgangkupplung. Über diesen mechanischen Anschlag muß bei einem Ausfall der Hilfskraftunterstützung oder bei einem Bruch des Torsionsstabes die gesamte mechanische Lenkkraft übertragen werden können. Derartige mechanische Lenkkräfte können sehr hoch sein. Bei dem bekannten Drehschieberventil ist deshalb die Totgangkupplung einerseits durch zwei stark ausgebildete Vorsprünge des Ritzelkörpers und andererseits durch zwei schlitzförmige Ausnehmungen in einem verdichteten Ende des Drehschiebers ausgeführt. Dadurch ergeben sich Abmessungen des Drehschieberventils, die durch die möglichen hohen mechanischen Beanspruchungen bedingt sind, die jedoch häufig zu groß sind für den begrenzten Einbauraum in einer Hilfskraftlenkung eines Kraftfahrzeuges. Durch die Verdickung des Endes des Drehschiebers ergibt sich außerdem eine Materialanhäufung, die einer kostengünstigen Herstellung des Drehschiebers entgegensteht.

Der Erfindung liegt die Aufgabe zugrunde, das Drehschieberventil zu verkleinern und eine kostengünstigere Herstellung zu ermöglichen, wobei jedoch die Größe des übertragbaren mechanischen Momentes erhalten bleiben soll.

Diese Aufgabe wird durch das im Anspruch 1 gekennzeichnete Drehschieberventil gelöst. Die Lösung besteht insbesondere darin, daß die Aussparungen der Totgangkupplung an dem Drehschieber zusammen mit den Steuer-Längsnuten spanlos hergestellt sind.

Vorteilhafte und zweckmäßige Ausgestaltungen der Erfindung sind in den Unteransprüchen angegeben. Durch die gemeinsame spanlose Herstellung der Aussparungen und der Steuer-Längsnuten an dem Drehschieber ist es möglich, die Aussparungen in den nach einem Ende hin offenen Steuer-Längsnuten des Drehschiebers anzuordnen. Dadurch können diese einseitig offenen Steuer-Längsnuten und die Aussparungen mit einem einzigen Werkzeug in einem Arbeitsgang hergestellt werden. Sollen dagegen die nach einem Seite hin offenen Steuer-Längsnuten in allen Betriebszuständen einen unveränderten Durchströmquerschnitt beibehalten, so können die Aussparungen am Ende des Drehschiebers zwischen den nach diesem Ende hin offenen Steuer-Längsnuten angeordnet sein. In diesem Fall können die Aussparungen mit einem Werkzeug hergestellt werden, mit dem die beidseitig geschlossenen Steuer-Längsnuten hergestellt werden. Zweckmäßig ist es dabei, wenn die Aussparungen mit diesen Steuer-Längsnuten fluchten, so daß sich ein einfaches, in der Höhe abgesetztes Werkzeug ergibt.

Zweckmäßig ist es, wenn der Drehschieber mit seinen Steuer-Längsnuten, seinen Steuerkanten und seinen Aussparungen durch Kaltumformen gefertigt wird.

Werden die Aussparungen des Drehschiebers in den nach einem Ende hin offenen Steuer-Längsnuten des Drehschiebers ausgebildet, so werden die Aussparungen breiter ausgeführt als die Steuer-Längsnuten in ihrem Steuerbereich, in dem sie mit Steuerkanten versehen sind. Dadurch wird einerseits die Aufnahme des Mitnahmeprofils des Ventil-Ausgangsgliedes und das Verdrehspiel zwischen den beiden Teilen ermöglicht. Außerdem wird dadurch ein Durchfluß des Druckmittels aus den Steuer-Längsnuten zwischen dem Drehschieber und dem Ventil-Ausgangsglied bereitgestellt.

Im folgenden wird die Erfindung anhand zweier in der Zeichnung dargestellter Ausführungsbeispiele näher erläutert. Es zeigt
- Fig. 1: einen Längsschnitt durch das erfindungsgemäße Drehschieberventil;
- Fig. 2: den Querschnitt durch das Drehschieberventil gemäß der Linie II-II in Fig. 1;
- Fig. 3 und 4: zwei Ausführungsformen der Erfindung mit je einer Ansicht des Drehschiebers.

Ein Drehschieberventil 1 enthält ein erstes Ventilelement in der Form eines Drehschiebers 2, der in einem zweiten Ventilelement in der Form einer Steuerbüchse 3 drehbar geführt ist. Der Drehschieber 2 ist mit einem Ventil-Eingangsglied 4 drehfest verbunden. Das Ventil-Eingangsglied 4 weist einen Lenkspindelanschluß 5 auf, mit dem das Ventil-Eingangsglied 4 beispielsweise mit einer nicht dargestellten Lenkspindel über ein ebenfalls nicht dargestelltes Kreuzgelenk verbunden ist. Die Steuerbüchse 3 ist über einen Stift 6 mit einem Ventil-Ausgangsglied 7 drehfest verbunden. Das Ventil-Ausgangsglied 7 stellt gleichzeitig ein Eingangsglied für den mechanischen Teil einer nicht dargestellten Hilfskraftlenkung dar und ist beispielsweise mit einem Ritzel 8 der Hilfskraftlenkung verbunden. Das Ventil-Eingangsglied 4 und damit der Drehschieber 2 ist mit dem Ventil-Ausgangsglied 7 über einen Torsionsstab 9 und über eine Totgangkupplung 10 verbunden.

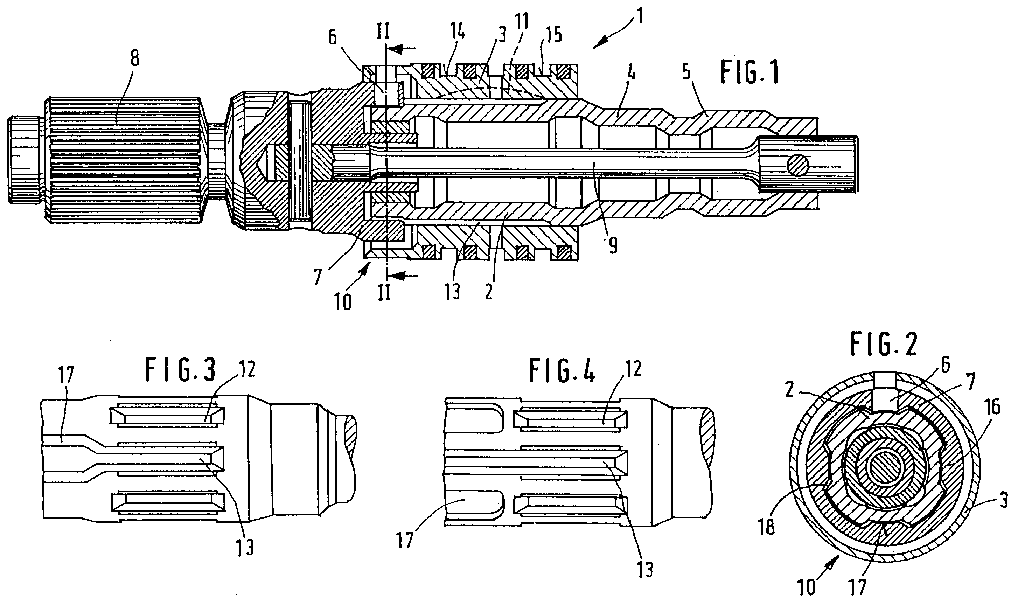

Die Steuerbüchse 3 weist innenliegende Steuer-Längsnuten 11 auf, der Drehschieber 2 weist außenliegende Steuer-Längsnuten 12 und 13 auf, die teilweise in ihrer axialen Länge begrenzt und teilweise nach wenigstens einem Ende hin offen sind. In Fig. 3 und 4 sind die Steuer-Längsnuten, deren beide Enden geschlossen sind, mit 12 bezeichnet, die Steuer-Längsnuten, die nach ihrem einen Ende hin in Richtung auf das Ventil-Ausgangsglied 7 offen sind, mit 13 bezeichnet. Die Steuer-Längsnuten 12 dienen zur Steuerung eines Druckmittels zu zwei Ringnuten 14 und 15, die am Außenumfang der Steuerbüchse 3 angeordnet sind. Die Ringnuten 14 und 15 ihrerseits sind verbunden mit den nicht dargestellten Arbeitsräumen eines Servomotors. Die Steuer-Längsnuten 13 sind über ihr offenes Ende mit dem Rücklauf zu einem nicht dargestellten Behälter verbunden.

Die Totgangkupplung 10 besteht auf der Seite des Ventil-Ausgangsgliedes 7 aus einem Mitnahmeprofil 16, das in Ausnehmungen 17 eingreift, die am Außenumfang des Drehschiebers 2 angeordnet sind. In dem Ausführungsbeispiel der Fig. 3 sind die Ausnehmungen 17 direkt in den Steuer-Längsnuten 13 angeordnet. Zur Aufnahme des Mitnahmeprofiles 16 sind die Ausnehmungen 17 entsprechend breiter ausgebildet als die Steuer-Längsnuten 13 in dem Bereich, in dem sie mit den Steuer-Längsnuten 11 der Steuerbüchse 3 zusammenwirken. Außerdem müssen die Ausnehmungen 17 so breit ausgeführt werden, daß in Verdrehrichtung zwischen ihren Seitenwänden und dem Mitnahmeprofil 16 das für die Steuerung des Drehschieberventils 1 erforderliche Verdrehspiel entsteht. Andererseits muß ein ungehinderter Rücklauf des Druckmittels aus den Steuer-Längsnuten 13 möglich sein.

In dem Ausführungsbeispiel der Fig. 4 sind die Ausnehmungen 17 in Umfangsrichtung zwischen den Steuer-Längsnuten 13 angeordnet. In diesem Fall haben die Steuer-Längsnuten 13 eine gleichmäßige Breite über ihre ganze Länge. Die Breite der Ausnehmungen 17 entspricht der Breite der Ausnehmungen 17 in Fig. 3. Um eine kostengünstige Herstellung mit einem einfachen Werkzeug zu ermöglichen, fluchten die Ausnehmungen 13 mit den Steuer-Längsnuten 12 in dem Ausführungsbeispiel der Fig. 4.

Die beschriebene Anordnung und Ausbildung der Ausnehmungen 17 in bezug auf die Steuer-Längsnuten 12 und 13 läßt sich besonders günstig dadurch erreichen, daß der Drehschieber 2 in einem spanlosen Fertigungsverfahren hergestellt wird. Der Drehschieber 2 kann mit seinen Steuer-Längsnuten 12 und 13, einschließlich der daran eingeformten Steuerkanten, und mit seinen Ausnehmungen 17 beispielsweise durch Kaltumformen fertiggestellt werden.

Die Anzahl der Ausnehmungen 17 entspricht der Anzahl der an beiden Enden geschlossenen Steuer-Längsnuten 12 und der Anzahl der nach einem Ende hin offenen Steuer-Längsnuten 13. Damit ist das Verhältnis der Gesamtzahl der Steuer-Längsnuten 12 und 13 zur Anzahl der Ausnehmungen 17 2 : 1. Dies ergibt den Vorteil, daß eine Fehlmontage von Drehschieber 2 und Steuerbüchse 3 unmöglich wird.

### Bezugszeichen

- 1: Drehschieberventil
- 2: Drehschieber
- 3: Steuerbüchse
- 4: Ventil-Eingangsglied
- 5: Lenkspindelanschluß
- 6: Stift
- 7: Ventil-Ausgangsglied
- 8: Ritzel
- 9: Torsionsstab
- 10: Totgangkupplung
- 11: Steuer-Längsnut
- 12: Steuer-Längsnut
- 13: Steuer-Längsnut
- 14: Ringnut
- 15: Ringnut
- 16: Mitnahmeprofil
- 17: Ausnehmung
- 18: Verdrehspiel

## Patentansprüche

1. Drehschieberventil für Hilfskraftlenkungen von Kraftfahrzeugen, mit einem Drehschieber (2), der mit einem Ventil-Eingangsglied (4) drehfest verbunden ist, und mit einer Steuerbüchse (3), die mit einem Ventil-Ausgangsglied (7) drehfest verbunden ist,
- wobei das Ventil-Eingangsglied (4) und der Drehschieber (2) mit dem Ventil-Ausgangsglied (7) über eine Totgangkupplung (10) verbunden sind,
- wobei der Drehschieber (2) koaxial in der Steuerbüchse (3) drehbeweglich angeordnet ist und die beiden Teile maximal um den Verdrehweg (18) der Totgangkupplung (10) relativ zueinander verdrehbar sind,
- wobei die Steuerbüchse (3) innenliegende und der Drehschieber (2) außenliegende, teilweise in ihrer axialen Länge begrenzte und teilweise nach wenigstens einem Ende hin offene Steuer-Längsnuten (11, 12, 13) aufweisen, die miteinander zusammenwirken zur Steuerung eines Druckmittels zu und von zwei Arbeitsräumen eines Servomotors und
- wobei die Totgangkupplung (10) aus einem Mitnahmeprofil (16) des Ventil-Ausgangsgliedes (7) und aus Ausnehmungen (17) am freien Ende des Drehschiebers (2) gebildet ist, in die das Mitnahmeprofil (16) eingreift,
dadurch **gekennzeichnet,** daß die Ausnehmungen (17) der Totgangkupplung (10) an dem Drehschieber (2) zusammen mit den Steuer-Längsnuten (12, 13) spanlos hergestellt sind.

2. Drehschieberventil nach Anspruch 1, dadurch **gekennzeichnet,** daß die Ausnehmungen (17) des Drehschiebers (2) in den nach einem Ende hin offenen Steuer-Längsnuten (13) des Drehschiebers (2) gebildet sind.

3. Drehschieberventil nach Anspruch 1, dadurch **gekennzeichnet,** daß die Ausnehmungen (17) des Drehschiebers (2) an der Außenumfangsfläche des Drehschiebers (2) zwischen den nach einem Ende hin offenen Steuer-Längsnuten (13) des Drehschiebers (2) angeordnet sind.

4. Drehschieberventil nach einem der Ansprüche 1 bis 3, dadurch **gekennzeichnet,** daß der Drehschieber (2) mit seinen Steuer-Längsnuten (12, 13), seinen Steuerkanten und seinen Ausnehmungen (17) durch Kaltumformen gefertigt ist.

5. Drehschieberventil nach Anspruch 2, dadurch **gekennzeichnet,** daß die Ausnehmungen (17) an den Enden der offenen Steuer-Längsnuten (13) breiter sind als die Steuer-Längsnuten (13) in ihrem Steuerbereich.

6. Drehschieberventil nach einem der Ansprüche 1 bis 3, dadurch **gekennzeichnet,** daß die nach einem Ende hin offenen Steuer-Längsnuten (13) mit dem Rücklauf zu einem Behälter verbunden sind.

7. Drehschieberventil nach einem der Ansprüche 1 bis 3, dadurch **gekennzeichnet,** daß die Gesamtzahl der Steuer-Längsnuten (12, 13) des Drehschiebers (2) zu der Zahl der Ausnehmungen (17) im Verhältnis 2 : 1 steht.

## Claims

1. Rotary slide valve for power-assisted steering systems of motor vehicles, having a rotary slide (2) which is connected non-rotatably to a valve input member (4), and having a control bush (3) which is connected non-rotatably to a valve output member (7),
- the valve input member (4) and the rotary slide (2) being connected to the valve output member (7) by a backlash coupling (10),
- the rotary slide (2) being disposed with rotary motion coaxially in the control bush (3) and the two parts being rotatable relative to one another at most by the rotation angle (18) of the backlash coupling (10),
- the control bush (3) having internal and the rotary slide (2) having external longitudinal control grooves (11, 12, 13), which are partially delimited in their axial length and partially open towards at least one end and which cooperate with one another to direct a pressure medium to and from two working chambers of a servomotor, and
- the backlash coupling (10) being formed by a driving profile (16) of the valve output member (7) and by recesses (17) at the free end of the rotary slide (2), into which recesses the driving profile (16) engages,
characterized in that the recesses (17) of the backlash coupling (10) on the rotary slide (2) together with the longitudinal control grooves (12, 13) are manufactured by a non-cutting process.

2. Rotary slide valve according to claim 1, characterized in that the recesses (17) of the rotary slide (2) are formed in the longitudinal control grooves (13) of the rotary side (2), which are open towards one end.

3. Rotary slide valve according to claim 1, characterized in that the recesses (17) of the rotary slide (2) are disposed in the outer peripheral surface of the rotary slide (2) between the longitudinal control grooves (13) of the rotary slide (2), which are open towards one end.

4. Rotary slide valve according to one of claims 1 to 3, characterized in that the rotary slide (2) with its longitudinal control grooves (12, 13), its control edges and its recesses (17) is manufactured by cold forming.

5. Rotary slide valve according to claim 2, characterized in that the recesses (17) at the ends of the open longitudinal control grooves (13) are wider than the longitudinal control grooves (13) in their control region.

6. Rotary slide valve according to one of claims 1 to 3, characterized in that the longitudinal control grooves (13) which are open towards one end are connected to the return line leading to a container.

7. Rotary slide valve according to one of claims 1 to 3, characterized in that the ratio of the total number of longitudinal control grooves (12, 13) of the rotary slide (2) to the number of recesses (17) is 2:1.

## Revendications

1. Vanne à boisseau rotatif pour une direction assistée d'un véhicule à moteur, comportant un boisseau rotatif (2) qui est rendu solidaire en rotation d'un organe d'entrée (4) de la vanne et une boîte de direction (3) qui est rendue solidaire en rotation d'un organe de sortie (7) de la vanne,
- dans laquelle l'organe d'entrée (4) de la vanne et le boisseau rotatif (2) sont liés à l'organe de sortie (7) de la vanne par l'intermédiaire d'un accouplement à jeu libre (10),
- dans laquelle le boisseau rotatif (2) est disposé coaxialement et mobile en rotation dans la boîte de direction (3), et dans laquelle ces deux pièces peuvent être tournées l'une par rapport à l'autre au maximum de la course de torsion (18) de l'accouplement à jeu libre (10),
- dans laquelle la boîte de direction (3) comporte des nervures longitudinales de guidage ouvertes (11, 12, 13), disposées à l'intérieur de la boîte et à l'extérieur du boisseau rotatif (2) en partie de façon limitée sur sa longueur et en partie orientées vers une de ses extrémités, ces nervures étant agencées pour coopérer et guider un moyen de pression vers ou en provenance de deux chambres de travail d'un servomoteur, et
- dans laquelle l'accouplement à jeu libre (10) est défini par un profil d'entraînement (16) de l'organe de sortie (7) de la vanne et par des évidements (17) à l'extrémité libre du boisseau rotatif (2), dans lesquels s'engage le profil d' entraînement (16),
**caractérisée** en ce que les évidements (17) de l'accouplement à jeu libre (10) sur le boisseau rotatif (2) sont réalisés selon un procédé de fabrication sans génération de copeaux, en même temps que les nervures longitudinales de guidage (12, 13).

2. Vanne à boisseau selon la revendication 1, **caractérisée** en ce que les évidements (17) du boisseau rotatif (2) sont formés dans les nervures longitudinales de guidage (13) ouvertes et orientées vers une extrémité de ce boisseau rotatif (2).

3. Vanne à boisseau selon la revendication 1, **caractérisée** en ce que les évidements (17) du boisseau rotatif (2) sont ménagés sur la surface périphérique de ce boisseau rotatif (2) entre les nervures longitudinales de guidage (13) ouvertes et orientées vers une extrémité de ce boisseau rotatif (2).

4. Vanne à boisseau selon les revendications 1 à 3, **caractérisée** en ce que le boisseau rotatif (2) ainsi que ses nervures longitudinales de guidage (12, 13) ses flancs de commande et ses évidements (17) sont réalisés par déformation à froid.

5. Vanne à boisseau selon la revendication 2, **caractérisée** en ce que les évidements (17) aux extrémités des nervures longitudinales de guidage (13) sont plus larges que les nervures longitudinales de guidage (13) dans leur zone de commande.

6. Vanne à boisseau selon les revendications 1 à 3, **caractérisée** en ce que les nervures longitudinales de guidage (13) ouvertes orientées vers une extrémité sont en communication avec un réservoir par le circuit de retour.

7. Vanne à boisseau selon les revendications 1 à 3, **caractérisée** en ce que le nombre total de nervures longitudinales de guidage (12, 13) du boisseau rotatif (2) et le nombre d'évidements (17) sont dans le rapport 2 à 1.
